Europäisches Patentamt

European Patent Office

Office européen des brevets

(19)

(11) Publication number: **0 014 227**
**B1**

(12) **EUROPEAN PATENT SPECIFICATION**

(45) Date of publication of patent specification: **04.06.86**

(51) Int. Cl.⁴: **G 11 B 7/00, H 04 N 5/83**

(21) Application number: **79103628.8**

(22) Date of filing: **24.09.79**

(54) **System and method of reproducing and erasing information.**

(30) Priority: **25.09.78 JP 118468/78**

(43) Date of publication of application:
**20.08.80 Bulletin 80/17**

(45) Publication of the grant of the patent:
**04.06.86 Bulletin 86/23**

(84) Designated Contracting States:
**DE FR GB NL**

(56) References cited:
**EP-A-0 004 432**
**DE-A-2 536 264**
**DE-A-2 727 189**
**DE-A-2 825 972**
**US-A-3 665 425**
**US-A-3 971 874**

**IEEE Spectrum Vol. 15, No. 8 Aug. 1978 p. 20-27**
**IBM Technical Disclosure Bulletin, Vol. 113 p.**
**3001-3002**

(73) Proprietor: **Matsushita Electric Industrial Co.,
Ltd.
1006, Oaza Kadoma
Kadoma-shi Osaka-fu, 571 (JP)**

(72) Inventor: **Ohta, Takeo
2-501, Green Kohpo 314-1, Ohmiya-cho 4-chome
Nara City, 630 (JP)**
Inventor: **Akahira, Nobuo
13-6, Kanaburi, Otokoyama
Yahata City, 614 (JP)**
Inventor: **Nakamura, Tatsushi
3-14, Miyuki-higashi-machi
Neyagawa City, 572 (JP)**
Inventor: **Yamashita, Tadaoki
16-1, Inda-cho
Hirakata City, 573 (JP)**

(74) Representative: **Jung, Elisabeth, Dr. et al
Dr. Elisabeth Jung Dr. Jürgen Schirdewahn
Dipl.-Ing. Claus Gernhardt Patentanwälte
Clemensstrasse 30 Postfach 40 14 68
D-8000 München 40 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a system of reproducing and a system of erasing information recorded in a disk as defined in the pre-characterizing portion of claim 1 or 3 and further relates to a method for reproducing information recorded in a disk.

It is known to record time-sequential signals such as sound signals video signals or data bits with high density on so-called optical video disks. According to one of these methods thickness changes are formed on the disk in accordance with the signals to be recorded by pressing a plastic film. The information is reproduced by illuminating the recorded film. Interference occurs between the light reflected at the surface of the thin film and the light reflected from its bottom. The intensity of the resultant reflecting light changes responding to the change of thickness of the thin film. Immediately after recording reproduction of the signal is not possible. Furthermore, the recorded information cannot be erased.

JP—A—52114306 (=GB—A—1560245) discloses a reflection type video disk. It comprises a light absorbing recording film disposed on a substrate disk with a light reflecting film in between. The light absorbing recording film consisting of organic dye is at least partly evaporated or distorted in response to the absorption of a laser light beam modulated by a signal an antireflection condition being established. Thereby micropits are formed which are reproduced by preferably the same laser at a reduced level. That video disk has not yet come into practical use because of difficulties in forming a protection coating on its recording film due to the necessity of its evaporation. The information recorded on that video disk cannot be erased.

The US—A—3665425 discloses an amorphous semiconductor thin film which can be switched between two stable states by applying a focussed laser beam of laser energy. In one state the thin film exhibits specular reflection while in the other state it exhibits diffuse reflection. Information is recorded by means of a laser light beam modulated in accordance with information to be recorded. The information is reproduced by illuminating the recording thin film and by detecting light reflected from regions of the thin film being in the diffuse reflection state. The detecting is made by means of a light detector which is positioned so that it can collect only light reflected from regions being in the diffuse reflection state, but not light reflected from regions being in the specular reflecting state, when irradiating the video disc with a reading light beam. The light scattered from the diffuse reflecting regions has a very weak intensity so that its detection is difficult.

The US—A—3971874 discloses an optically recording thin film the state of which can be changed between a low optical density state and a high optical density state by the application of optical energy. The recording thin film which can be made of a mixture of tellurium oxide and lead oxide is deposited on a transparent substrate. Said US—A—3971874 does not disclose a method of reproducing recorded information. No teaching is given as to how the recorded information is erased.

According to general practice, the recording beam wave-length is selected to obtain a low reflectivity, i.e. recording is made in an offset-interference condition so that a high percentage of the recording beam energy is utilized for the recording. Reproducing is also made in the interference condition, as is described in the IBM Technical Disclosure Bulletin, Vol. 13, p. 3001—3002, 1971.

The problem to be solved by the present invention is to provide a method and a system of reproducing information from an optical thin film which allows the information to be reproduced immediately after recording, and which allows efficient reproduction for a wide range of thickness and a system of erasing.

This problem is solved by a system of reproducing information recorded in a disk as defined in the precharacterizing portion of claim 1 which is characterized in that said difference is negative and that interference at a non-recorded part is such as not to produce minimum apparent reflection.

A system of erasing is set out in claim 3. The recording on the thin film is made by irradiating an optically sensitive thin film with a focussed light thereby changing its refractive index and light absorption coefficient at the irradiated region. The reproducing of the recorded information is made by irradiating that recorded region with focussed light thereby making interference between light reflected from the light incident surface and light reflected from the bottom surface of the thin film.

The systems in accordance with the present invention have the advantages of

(1) enabling immediate reproducing of highly dense information after the recording,

(2) enabling such as efficient optical reproduction of the information as attaining as large value as 20% in the absolute value of variation of apparent reflection of light from the thin film, and

(3) enabling the erasing of recorded information.

Furthermore, since no substantial geometrical variation of the thin film is made, the optically sensitive thin film can be protected by sandwiching it between a substrate plate and a protection film without any problems, thereby a durable and easy-to handle recording sheet being obtainable.

An advantageous further development of the system of reproducing information is stated in claim 2.

A method for reproducing information recorded in a disk is stated in claim 4.

The invention is now further illustrated by means of embodiments and with reference to the drawings.

Fig. 1 is a perspective view of an example of a recording disk for the present invention.

Fig. 2 is a sectional view of the recording disk for illustrating principles of the present invention.

Fig. 3 is an enlarged plan view of a part of a thin film recording media.

Fig. 4 is a graph showing relation between positions on a track and relative intensity of reflected light.

Fig. 5 is a schematic view showing an apparatus for recording in accordance with the present invention.

Fig. 6 is a schematic view showing an apparatus for reproducing signal in accordance with the present invention.

Fig. 7 is a graph showing relations between film thickness and reflections of a recording thin film.

Fig. 8 is a graph showing relations between film thickness and reflections when a light reflecting film is provided on the back face of a thin recording film.

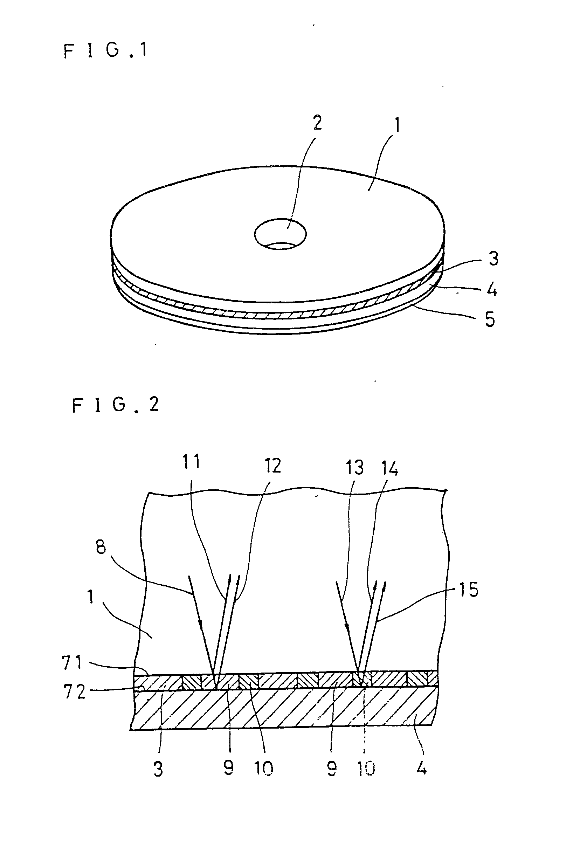

Principle of the invention is elucidated referring to Figs. 1, 2, 3, 4, 5 and 6.

Fig. 1 schematically shows constructions of a recording disk to be used in the present invention, wherein a thin film 3 in which information is recorded is disposed on a transparent disk-shaped substrate 1. A protection film 4 is provided on the thin film 3, and a label 5 is further provided on the protection film 4. A center hole 2 is provided to install the disk in a recording apparatus or in a reproducing apparatus.

For the substrate 1, a plate of transparent and optically homogeneous plate with highly parallel and flat surfaces is used. Suitable material for the substrate 1 is a glass, such as soda-lime glass, quartz or heat durable glass, or plastics such as acryl resin, vinyl chloride or ABS resine, or transparent plastic sheet or plate of polyester or acetatefluorocarbon copolymer. For the material of the recording thin film 3, a compound of light-absorbing sub-oxide of metal or semi metal, for example, a compound consisting principally of $TeO_{x1}$ ($0 < x1 < 2.0$) and sensitized by $PbO_{x3}$ ($0 < x3 < 1.0$) disclosed in the US Patent 3,971,874 is suitable. The protection film 4 can be a vacuum-deposited aluminum film which also serves as a reflection film.

For the protection film 4, for example, a vacuum deposited aluminum layer of preferably over 300Å, backed by a suitable plastic coating for protection is suitable. For a thickness of the aluminum layer of under 300Å, the reflection is not sufficient.

Principle of recording

In the following the principle of recording is described in order to elucidate the principles of reproducing and of erasing according to the invention.

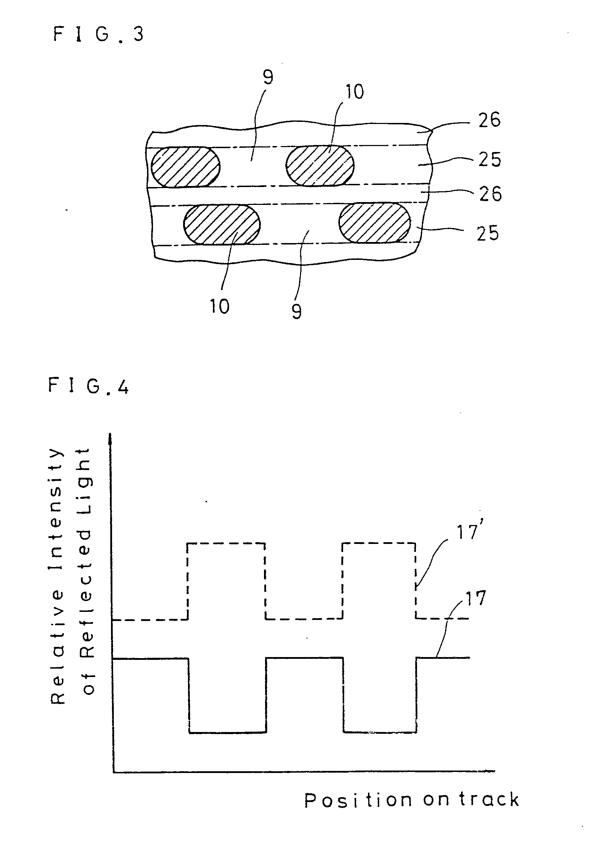

The recording of the information on the thin film is made by striking a track on the thin film by a focussed monochromatic light of a known source, such as a focussed laser beam or suitable focussed light beam of a known monochromatic light source. By striking the thin film with the focussed light beam, a certain part of light energy is absorbed by the thin film 3, since the thin film has its own absorption of light. When such absorbed energy exceeds a specified recording threshold level, then irradiated parts undergo a physical change. By utilizing, for example a thin film of a solid solution principally comprises $TeO_{x1}$, wherein x1 is $0 < x1 < 2.0$, and sensitized by $PbO_{x3}$ wherein x3 is $0 < x3 < 1.0$, at the irradiation of a laser light of a predetermined intensity, the refractive index of the thin film can be changed from 2.2 to 2.6 and also its absorption coefficient can be changed from $1.2 \times 10^5$ cm$^{-1}$ to $2 \times 10^5$ cm$^{-1}$. By means of such a change of the physical natures, the information is recorded on the thin film. Fig. 2 shows schematic sectional views of the recorded disk and Fig. 3 shows an enlarged plan view of the recorded disk, where numerals 10, 10 designate recorded, hence physically changed parts, numerals 9, 9 designate the part, which is not physically changed, numerals 25, 25 designate recording tracks and numerals 26, 26 designate spaces, respectively. In the recording, for power efficiency reasons, it is usually preferred to select the wavelength of the monochromatic light in manner that light reflected by the light-incident surface and the inside face of the opposite surface of the thin film interfere with each other in offsetting manner. Such a condition is given when the following equation is fully or roughly satisfied:

$$n = (2q+1)\frac{\lambda}{4d} \qquad (1)$$

where
   n—refractive index of the thin film,
   d—thickness of the thin film,
   λ—wavelength of the monochromatic light,
   q—positive integer.

Principle of reproducing

The reproducing of the optically recorded signal in the thin film 3 is made by the following way:

When monochromatic incident light beams 8 and 13 strike the non-recorded part 9 and recorded part 10, respectively, reflections at the incident surface 71 make reflection lights 11 and 14, and reflections at the inside face 72 (bottom face) of the opposite surface make reflection lights 12 and 15, respectively. And the pairs of reflection lights 11 and 12, as well as, reflection lights 14 and 15 interfere with each other. Therefore, by the difference of the refractive indexes of the recorded part 10 and the non-recorded part 9, the result of the interference can be changed, so as to change intensities of the resultant reflection lights of these two parts from each other.

Provided that:
   d—designate the thickness of the thin film both at the recorded part 10 and the non-recorded part 9, in other words, provided that the physical differences are only in the refractive index and absorption coefficient of light, but not in the thickness, and also provided that

$R_1$ and $R_2$—designate the reflections of light for the non-recorded part and the recorded part, respectively, and

$\alpha_1$ and $\alpha_2$—designate the absorption coefficients of light for the non-recorded part and the recorded part, respectively, then the below-mentioned relations exist.

In general, when the equation

$$2n_j d=\frac{\lambda}{2}+m\lambda \qquad (2)$$

holds (wherein $n_j$ is the refractive index of the part and $\lambda$ is the light wavelength), the phases of the reflection lights reflected by the light-incident surface and the opposite face differs by $\pi$ radian, and hence the reflection lights offset each other, and therefore, reflection $R_j$ of the part is low. On the other hand, when the equation

$$2n_j d=m\lambda \qquad (3)$$

holds, the phases of the reflection lights reflected by the incident surface and the opposite face becomes same, and hence the resultant reflection lights becomes sum of the two component reflection lights, and therefore, the reflection $R_j$ of the part is high.

Namely, as a result of interference of the reflection lights from the incident face and the opposite face, the resultant reflection lights have minimum intensities (namely, the reflection lights 11 and 12 offset each other and the reflection lights 13 and 14 offset each other), when the following equations substantially hold at the respective parts:

$$\left.\begin{array}{l} n_1=(2m+1)\dfrac{\lambda}{4d} \\[2mm] \text{or} \\[2mm] n_2=(2m'+1)\dfrac{\lambda}{4d} \end{array}\right\} \qquad (4)$$

where m and m' are positive integers, and

the resultant reflection lights have maximum intensities (namely, the reflection lights 11 and 12 boost each other and the reflection lights 13 and 14 boost each other), when the following equation substantially holds at the respective parts:

$$\left.\begin{array}{l} n_1=2m\dfrac{\lambda}{4d} \\[2mm] \text{or} \\[2mm] n_2=2m'\dfrac{\lambda}{4d} \end{array}\right\} \qquad (5)$$

Therefore, by making the refractive indexes $n_1$ and $n_2$ to have such pair of:

$$\left.\begin{array}{l} n_1=(2m+1)\cdot\dfrac{\lambda}{4d} \\[2mm] \text{and} \\[2mm] n_2=2m'\cdot\dfrac{\lambda}{4d} \end{array}\right\} \qquad (6)$$

the resultant reflection light at the non-recorded part 9 becomes minimum, and the resultant reflection light at the recorded part 10 becomes maximum.

Alternatively, by selecting the refractive indexes so as to make the other pair of:

$$\left.\begin{array}{l} n_1=2m\cdot\dfrac{\lambda}{4d} \\[2mm] \text{and} \\[2mm] n_2=(2m'+1)\dfrac{\lambda}{4d} \end{array}\right\} \qquad (7)$$

the resultant reflection light at the non-recorded part 9 becomes maximum, and the resultant reflection light at the recorded part 10 becomes minimum. Thus, in both cases of the abovementioned selections (6) and (7), contrast between the intensities of the recorded part 10 and the non-recorded part 11, or in other words, the difference $\Delta R$ between the reflections $R_1$ and $R_2$, can be maximum. According to the invention, the polarity of the difference $\Delta R$ is selected to be negative. This may be done by selecting relation between the thickness and the refractive indexes.

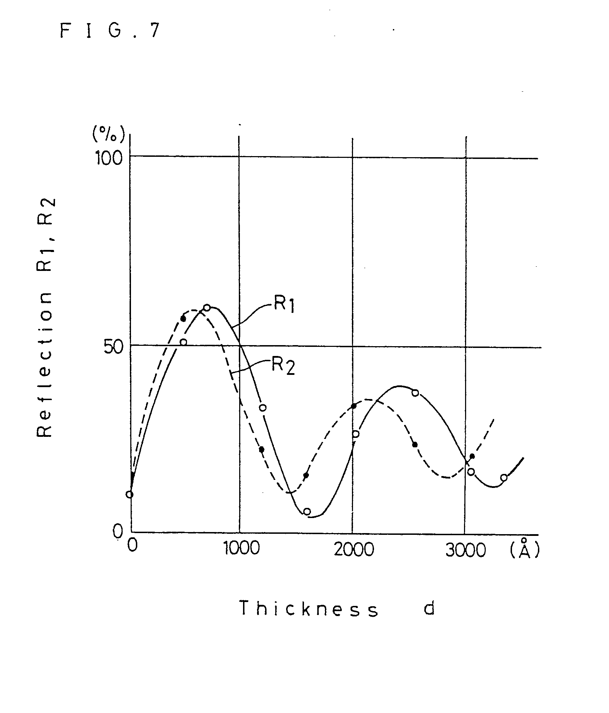

Now, let us further consider the effect of the absorption coefficients $\alpha_1$ and $\alpha_2$ of the thin film 3. In a thin film having absorption coefficients $\alpha_1$ and $\alpha_2$, the reflections $R_1$ and $R_2$ oscillatingly vary as thickness d varies as shown in Fig. 7. This can be elucidated by adopting complex refractive indexes $\eta_1$ and $\eta_2$:

$$\left.\begin{array}{l} \eta_1=n_1-ik_1 \\[2mm] \text{and} \\[2mm] \eta_2=n_2-ik_2 \end{array}\right\} \qquad (8)$$

where $k_2$ and $k_2$ are extinction coefficients and are represented by the equation

$$\left.\begin{array}{l} k_1=\dfrac{\lambda}{4\pi}\cdot\alpha_1 \\[2mm] \text{and} \\[2mm] k_2=\dfrac{\lambda}{4\pi}\cdot\alpha_2 \end{array}\right\} \qquad (9)$$

Generally speaking, the oscillation amplitudes of the values of reflections $R_1$ and $R_2$ attenuate as the thickness d of the thin film 3 increases. This is due to the absorption of the thin film 3. In order to effectively utilize the effect of the interference of light, the absorption coefficient of light should be under $5 \times 10^5$ cm$^{-1}$.

In case the thin film 3 is very thin, by applying a protection film 4 of a very high reflection on the rear face of the thin film 3, the effect of the difference between the absorption coefficients $\alpha_1$ and $\alpha_2$ becomes predominant over the difference between the refractive indexes $n_1$ and $n_2$. Since the recorded parts have a considerably large absorption coefficient, the reflection light reflected by the inside face 72 of the thin film 7 is considerably weak, so that the intensity of the reflection light by the incident face 71 and that by the inside face 72 can be selected to be equal. Therefore, when the recording is made to such polarity as to offset both the reflection lights by interference, and reproducing by striking a weaker laser light beam focussed on the same recorded part, the resultant reflected light has an extremely low intensity at the recorded part. And hence, a very wide dynamic range of the reproduced light is obtainable. In other words, by suitably selecting the thickness of the thin film, a high signal to noise ratio can be obtained.

It is to be noted in the reproducing of the recorded information, the energy intensity should be selected to such a level that does not cause the light energy absorbed by the recorded area, which has an increased absorption, to exceed recording threshold level of the thin film. In practical uses, the energy density of the light beam spot to trace the recording track should be about 10% or lower than that used for the recording. Because, with such low energy of light beam, there is no fear of exceeding the recording

recording disk has
recording disk rotates at
this film 3 is $(TeO_{x1})_{1-z}$ $(PbO_{x3})_z$
    $(0<x1<2.0,\ 0<x3<1.0,\ 0<z<0.5)$
non-recorded parts
recorded parts
recording laser light
recording focussed spot
recording energy density

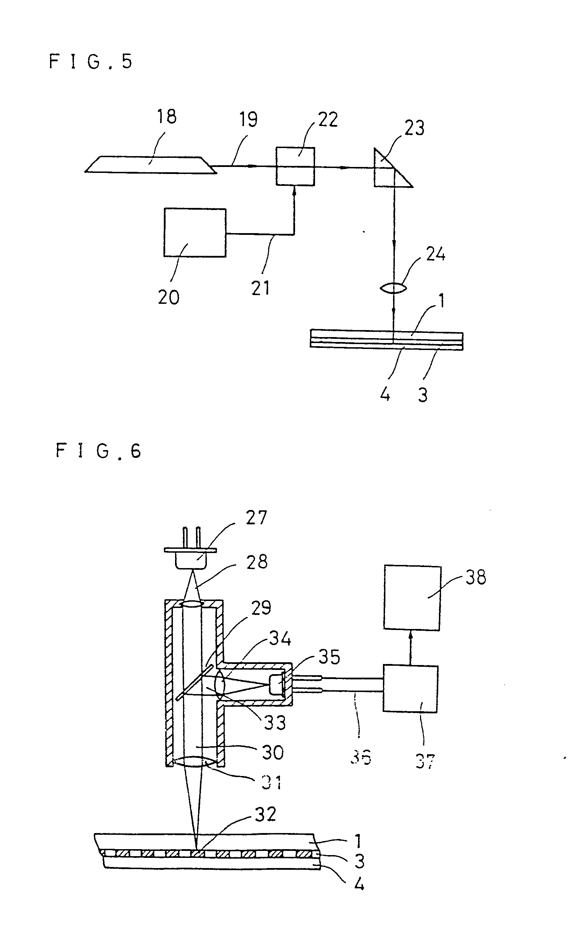

Fig. 6 gives a schematic illustration of an example apparatus for reproducing the information in accordance with the present invention. The reproducing is made by utilizing changes of refractive indexes $n_1$ and $n_2$, as well as, absorption coefficients $\alpha_1$ and $\alpha_2$. A substantially monochromatic light source, for example, a semiconductor laser 27 is used for a light source of a reading light beam 28. The light beam 28 passes through a half-mirror 29 and is focussed by a lens 31 on a thin film 3 through a transparent substrate 1. The reflected light from the thin film 3 travels back to the half-mirror 29 and is reflected by it. The light 33 reflected by the half-mirror 29 is focussed by a lens 34 on a photoelectric cell, for example, a photo-transistor 35. The photoelectric-transduced electric output signal 36

threshold level hence making erroneous recording.

Fig. 4 shows examples of relations between the position on a track and relative intensity of reflected light. The solid curve 17 shows a case (of a negative polarity) where the reflected light is smaller in the recorded part than in the non-recorded part. The dotted curve 17' shows another case (of a positive polarity) where the reflected light is larger in the recorded part than in the non-recorded part. According to the invention the solid curve 17 is selected by selecting the relation between the film thickness d, refractive indexes $n_1$ and $n_2$ and the absorption coefficients $\alpha_1$ and $\alpha_2$.

Fig. 5 gives a schematic illustration of an apparatus for recording the information further to be reproduced or erased in accordance with the present invention. A laser 18 emanates a light beam 19 to a light-modulator 22 where the laser light beam 19 is amplitude-modulated by the modulating signal given from a data processor 20. For the laser 18, a He-Ne laser of wavelength of 6328Å, a He-Cd laser of wavelength of 4416Å, an Ar laser of wavelength of 5145Å or a semiconductor laser of wavelength of 8200Å can be used. The modulated laser light beam passes through a mirror 23, focussed by a lens 24, and strikes a thin film 3 formed on the rear face of a transparent and highly parallel-face-finished substrate plate 1 therethrough. When the recording disk, which consists of the substrate 1, thin film 3 on the reflection and protection film 4, rotates relatively to the focussed laser beam at a predetermined speed, information data such as data bits are stored on the thin film.

An example of the recording is as follows:

diameter of 20 cm,
speed of 1800 rpm,

thickness of 1700Å
$n_1 = 2.2,\ \alpha_1 = 1.2 \times 10^5$ cm$^{-1}$,
$n_2 = 2.6,\ \alpha_2 = 2 \times 10^5$ cm$^{-1}$,
$\lambda = 8200$Å
diameter of 1.4μm
40 m Joule/cm$^2$.

of the photo-transistor 35 is lead through an amplifier to a data processor 38 which reproduces the recorded information. As the reflected light, an amplitude-modulated light by a modulation ratio of 50% to 70% can be obtained, and therefore by photoelectrically transducing it a signal of good S/N ratio is obtainable. The negative polarity of the output signal can be selected by varying relation between the wavelength of the light, the thickness and refractive indexes of the thin film 3.

With ΔR having a negative value, the resultant reflected light from the non-recorded part is stronger than that from the recorded part, and therefore, the recorded information can be reproduced with a good S/N ratio when using a considerably strong reading light. This is especially so when a recording of an analogue signal is made.

Principle of erasing

Also in this case of using negative value $\Delta R$, erasing of the recorded information can be made easily by further irradiating desired part of the track with a light beam of a predetermined energy level which is slightly lower than the recording threshold level. The reason of this easy erasing is as follows: Suboxide thin film consisting mainly of $TeO_{x1}$ has the nature that the recording is made by absorbing irradiated light with an energy level which is in a first energy region, between the recording threshold level and the erasing threshold level, say 100 and 120 in relative values, and the recording is not made at absorbing light under the energy level of the recording threshold level, say under the level of 100, and that the recorded information is erased at absorbing a light energy which exceeds the level of the erasing threshold level, (say, a light energy exceeding the level 120). Since the recorded part in this $\Delta R<0$ type recording case has a high absorption $\alpha_2$, and therefore, when the abovementioned light beam of slightly lower energy level than that used in the recording is applied on the thin film, then due to the high absorption coefficient of light and decreased reflection, the light energy absorbed at the recorded part becomes considerably high and exceeds the abovementioned erasing threshold level (namely the level 120 for the example), and hence the recorded information is erased, and no recording is made for the non-recorded part which has a low absorption due to the slightly lower energy level than the recording threshold level.

Example 1

For a thin film 3 formed on a substrate 1 of the recording disk, a compound principally consisting of $TeO_{x1}$, wherein $0<x1<2.0$, is used. For a substrate 1, an acryl resin disk of the thicknes of 1.0mm with very flat parallel faces is used, and the thin film 3 is formed on the substrate 1 by known vapor deposition method. In this example, there is no particular reflection film provided on the back face 72 of the thin film. The thickness of the thin film 3 can be desirably controlled by the deposition time and amount of solid solution of the compound, and the effect of the thickness is discussed in detail in the following.

Fig. 7 is a graph showing curves of changes of the reflections $R_1$ and $R_2$ of the thin film 3 in relation to the change of film thickness d, for the non-recorded part and recorded part, respectively. The light source used for the information reproducing is a He-Ne laser and the wavelength is 6328Å.

The abovementioned thin film generally shows pale brown appearance, but depending on the thickness the reflected light is observed as blue, green, red or reddish color.

When the measurements of the reflections $R_1$ and $R_2$ are made by using a light of a longer wavelength, for example, by using the light of the wavelength of 8200Å, then the reflection-film thickness curve shows a waving of longer period of the film thickness, namely the curves vary as if extended towards the direction of larger film thickness. The peaks of the curves correspond to each-other-boosting of the reflections from the incident surface and the inside face of the other surface, and the valleys of the curves correspond to each-other-offsetting of the reflections. By a recording, in general, the refractive index of the thin film 3 increases and the characteristic curve of the reflection changes from the curve $R_1$ to the curve $R_2$, as if the curve shrinks towards the side of smaller thickness in the graph. The reproducing of the information is made by detection of the difference between the reflected lights due to the difference $\Delta R=R_2-R_1$ for the thickness of the thin film used. For instance, in this example wherein the wavelength $\lambda$ is 6328Å, a negative value of $\Delta R$ is obtainable for the following cases:

   (1)  $d=800$Å to 1400Å,
and
   (2)  $d=2200$Å to 3000Å

By selecting the relation of thickness of the thin film and the wavelength, the polarity of R can be selected and the $\Delta R=|R_2-R_1|$ of more than 20% is obtainable.

It is practically acceptable when utility factor A defined by

$$A=\frac{\text{light energy absorbed in the thin film}}{\text{light energy incident on the thin film}}\times 100\ (\%)$$

$$(10)$$

of irradiated light incident to the thin film 3 is from 60% to 95%. On the other hand, the utility factor A is also represented by

$$A=100-(R+T)(\%) \qquad (11)$$

wherein R is reflection and T is transmission. Both of the reflection R and the transmission bring loss of light.

When a thin film of the thickness of 2600Å is used, $\Delta R$ is negative and the value is $\Delta R=x17(\%)$, and the value is practical for recording on thin film.

Example 2

This second example is provided with a reflection film 4 on the back face which is opposite to light incident face of the thin film 3. Such a reflection film is preferable especially for the case that the thickness of the thin film is very small and hence its transmission is over 50%.

For a substrate 1, an acryl resin disk of the thickness of 1.0mm with very flat parallel faces is used, and a thin film 3 mainly consisting of $TeO_{x1}$

wherein $0 < x1 < 2.0$ is formed on the substrate 1 by a known vapor deposition method. A reflection film 4 of a vapor-deposited aluminum of 300Å or more is disposed on the opposite face 72 to a light incident face 71 of the thin film 3. Further on the back face of the reflection film, a resin film for protection purpose may be provided.

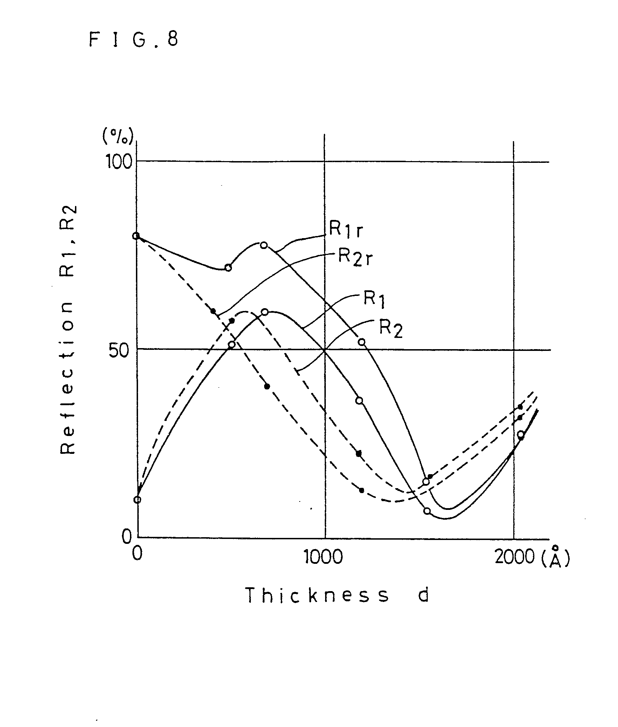

Fig. 8 is a graph showing curves of changes of the reflections $R_{1\gamma}$ and $R_{2\gamma}$ of the thin film 3 of this Example in relation to the change of film thickness d, for the non-recorded part and the recorded part, respectively. The curves $R_1$ and $R_2$ are the corresponding reflections of the previous Examples where no reflection film is provided, shown for a comparison.

In this Example, as the film thickness increases in the very thin region, the curve $R_{1\gamma}$ for the reflection of the non-recorded part decreases, thereby nearing to the curve $R_1$. It is to be noted that, in this Example, the curve $R_{2\gamma}$ for the recorded part is lower than the curve $R_{1\gamma}$ for such a wide region as up to 1500Å of the thickness d. In other words, for the very wide region of d, the $\Delta R = R_2 - R_1$ is negative, and furthermore, the absolute value of $\Delta R$ is also so large as over 30%. Therefore, an efficient reproduction of information is possible for a wide range of the film thickness.

## Claims

1. A system of reproducing information recorded in a disc, said disc comprising a transparent substrate (4) coated with a thin recording film (3) consisting mainly of $TeO_x$ wherein $0 < x < 2$, the film having a uniform film thickness (d) and changing its refractive index and its absorption coefficient at irradiated parts if the absorbed light energy is higher than a recording level, said uniform film thickness (d) for a wavelength of a reproducing monochromatic light beam, exhibiting a first apparent reflection value R1 when interference takes place between a first light beam reflected from the front face of a non-recorded part of said film and a second light beam which has passed through said non-recorded part of the film and has been reflected from the bottom face of the film, and exhibiting a second apparent reflection value R2 when interference takes place between a first light beam reflected from the front face of a recorded part of said film and, the second light beam has passed through said recorded part of the film and has been reflected from the bottom of the face of the film, the difference $\Delta R = R_2 - R_1$ between the second and first apparent reflection values having a selected contrast value, characterized in that said difference $\Delta R$ is negative and that interference of a non recorded part is such as not to produce minimum apparent reflection.

2. A system according to claim 1, characterized in that said thin recording film (3) has a transmittance of over 50% and that a reflection film layer is provided on that bottom surface.

3. A system of erasing information recorded in a disc, said disc comprising a transparent substrate (4) coated with a thin recording film consisting mainly of $TeO_x$ wherein $0 < x < 2$ (3), the film having a uniform film thickness (d) and changing its refractive index and its absorption coefficient at irradiated parts if the absorbed light energy is higher than a recording level, and erasing when absorbed energy level is higher than the recording absorbed energy level, said uniform film thickness (d) for a wavelength of a reproducing monochromatic light beam, exhibiting a first apparent reflection value R1 when interference takes place between a first light beam reflected from the front face of a non-recorded part of said film and a second light beam which has passed through said non-recorded part of the film and has been reflected from the bottom face of the film, and exhibiting a second apparent reflection value R2 when interference takes place between a first light beam reflected from the front face of a recorded part of said film, and the second light beam has passed through said recorded part of the film and has been reflected from the bottom of the face of the film, the difference $\Delta R = R2 - R1$ between the second and first apparent reflection values having a selected contrast value, characterized in that said difference $\Delta R$ is negative and that the erasing irradiation has such an intensity that, when absorbed at recorded regions having a decreased apparent reflection value (R2) and an increased light absorption coefficient relative to non-recorded regions, the absorbed energy value exceeds the erasing level, and when absorbed at non-recorded regions, the absorbed energy value does not exceed the recording level.

4. A method for reproducing information recorded in a disc, said disc comprising a transparent substrate (4) coated with a thin recording film (3) consisting mainly of $TeO_x$ wherein $0 < x < 2$, the film having a uniform film thickness (d) and changing its refractive index and its absorption coefficient at irradiated parts if the absorbed light energy is higher than a recording level, said uniform film thickness (d) for a wavelength of a reproducing monochromatic light beam, exhibiting a first apparent reflection value R1 when interference takes place between a first light beam reflected from the front face of a non-recorded part of said film and a second light beam which has passed through said non-recorded part of the film and has been reflected from the bottom face of the film, and exhibiting a second apparent reflection value R2 when interference takes place between a first light beam reflected from the front face of a recorded part of said film and, the second light beam has passed through said recorded part of the film and has been reflected from the bottom of the face of the film, the difference ($\Delta R$) between the second and first apparent reflection values having a selected contrast value, wherein said difference $\Delta R$ is negative and the interference of a non-recorded part is such as not to produce minimum apparent reflection according to an offset point, said method further comprising the steps of producing a monochromatic light beam, focussing said monochromatic light beam to form a focussed light spot beam on said thin recording film having thermally state transition portions where the light absorption coefficient and the refractive index are changed, sweeping said focussed light spot beam on said thin recording film with an intensity sufficiently lower than an intensity threshold level for changing optical characteristics of the thin recording film, producing interference reflection light between reflection light from a light-incident surface of said thin recording film and another reflection light from a bottom face thereof, and transducing said interference reflection light photoelectrically, thereby generating an electric signal.

**Patentansprüche**

1. System zum Wiedergeben von in einer Scheibe aufgezeichneten Informationen, wobei die Scheibe aus einem transparenten Substrat (4) besteht, welches mit einem dünnen Aufzeichnungsfilm (3) überzogen ist, der hauptsächlich aus $TeO_x$ besteht, worin $0<x<2$ ist, der Film eine gleichmäßige Filmdicke (d) hat und seinen Brechungsindex und seinen Absorptionskoeffizienten an angestrahlten Teilen ändert, wenn die absorbierte Lichtenergie höher als der Aufzeichnungspegel ist, die gleichmäßige Filmdicke (d) für eine Wellenlänge eines wiedergebenden monochromatischen Lichtstrahles einen ersten scheinbaren Reflexionswert R1 zeigt, wenn Interferenz zwischen einem ersten Lichtstrahl, der von der Vorderfläche eines nicht mit einer Aufziechnung versehenen Teiles des Filmes reflektiert ist, und einem zweiten Lichtstrahl auftritt, der durch den nicht mit einer Aufzeichnung versehenen Teil des Filmes hindurchgegangen und von der Unterfläche des Filmes reflektiert worden ist, und einen zweiten scheinbaren Reflexionswert R2 zeigt, wenn Interferenz zwischen einem ersten Lichtstrahl, der von der Vorderfläche eines mit einer Aufzeichnung versehenen Teiles des Filmes reflektiert ist, und dem zweiten Lichtstrahl auftritt, der durch den mit einer Aufzeichnung versehenen Teil des Filmes hindurchgegangen und von der Unterseite der Fläche des Filmes reflektiert ist, wobei der Unterschied $\Delta R = R_2 - R_1$ zwischen dem zweiten und dem ersten scheinbaren Reflexionswert einen ausgewählten Kontrastwert hat, dadurch gekennzeichnet, daß der Unterschied $\Delta R$ negativ ist und daß die Interferenz eines nicht mit einer Aufzeichnung versehenen Teiles derart ist, daß keine minimale scheinbare Reflexion erzeugt wird.

2. System nach Anspruch 1, dadurch gekennzeichnet, daß der dünne Aufzeichnungsfilm (3) eine Lichtdurchlässigkeit von über 50% hat und daß eine Reflexionsfilmschicht an der Unterfläche vorgesehen ist.

3. System zum Löschen von in einer Scheibe aufgezeichneten Informationen, wobei die Scheibe aus einem transparenten Substrat (4) besteht, welches mit einem dünnen Aufzeichnungsfilm (3) überzogen ist, der hauptsächlich aus $TeO_x$ besteht, worin $0<x<2$ ist, der Film eine gleichmäßige Filmdicke (d) hat und seinen Brechungsindex und seinen Absorptionskoeffizienten an angestrahlten Teilen ändert, wenn die absorbierte Lichtenergie höher als der Aufzeichnungspegel ist, und ein Löschen bewirkt, wenn der absorbierte Energiewert höher ist als der beim Aufzeichnen absorbierte Energiewert, die gleichmäßige Filmdicke (d) für eine Wellenlänge eines wiedergebenden monochromatischen Lichtstrahles einen ersten scheinbaren Reflexionswert R1 zeigt, wenn Interferenz zwischen einem ersten Lichtstrahl, der von der Vorderfläche eines nicht mit einer Aufzeichnung versehenen Teiles des Films reflektiert ist, und einem zweiten Lichtstrahl auftritt, der durch den nicht mit einer Aufzeichnung versehenen Teil des Filmes Hindurchgegangen und von der Unterfläche des Filmes reflektiert worden ist, und einen zweiten scheinbaren Reflexionswert R2 zeigt, wenn Interferenz zwischen einem ersten Lichtstrahl, der von der Vorderfläche eines mit einer Aufzeichnung versehenen Teiles des Filmes reflektiert ist, und dem zweiten Lichtstrahl auftritt, der durch den mit einer Aufzeichnung versehenen Teil des Filmes hindurchgegangen und von der Unterseite der Fläche des Filmes reflektiert ist, wobei der Unterschied $\Delta R = R2 - R1$ zwischen dem zweiten und dem ersten scheinbaren Reflexionswert einen ausgewählten Kontrastwert hat, dadurch gekennzeichnet, daß die Differenz $\Delta R$ negativ ist und daß die Löschstrahlung eine solche Intensität hat, daß sie bei Absorption an den mit Aufzeichnung versehenen Bereichen einen verringerten scheinbaren Reflexionswert (R2) und einen vergrößerten Lichtabsorptionskoeffizienten relativ zu den nicht mit Aufzeichnung versehenen Bereichen hat, der absorbierte Energiewert den Löschpegel überschreitet und bei Absorption an nicht mit Aufzeichnung versehenen Bereichen der absorbiert Energiewert den Aufzeichnungspegel nicht überschreitet.

4. Verfahren zum Wiedergeben von in einer Scheibe aufgezeichneten Informationen, wobei die Scheibe aus einem transparenten Substrat (4) besteht, welches mit einem dünnen Aufzeichnungsfilm (3) überzogen ist, der hauptsächlich aus $TeO_x$ besteht, worin $0<x<2$ ist, der Film eine gleichmäßige Filmdicke (d) hat und seinen Brechungsindex und seinen Absorptionskoeffizienten an angestrahlten Teilen ändert, wenn die absorbierte Lichtenergie höher als der Aufzeichnungspegel ist, die gleichmäßige Filmdicke (d) für eine Wellenlänge eines wiedergebenden monochromatischen Lichtstrahles einen ersten scheinbaren Reflexionswert R1 zeigt, wenn Interferenz zwischen einem ersten Lichtstrahl, der von der Vorderfläche eines nicht mit einer Aufzeichnung versehenen Teiles des Filmes reflektiert ist, und einem zweiten Lichtstrahl auftritt, der durch den nicht mit einer Aufzeichnung versehenen Teil des Filmes hindurchgegangen und von der Unterfläche des Filmes reflektiert worden ist, und einen

15 **0 014 227** 16

zweiten scheinbaren Reflexionswert R2 zeigt, wenn Interferenz zwischen einem ersten Lichtstrahl, der von der Vorderfläche eines mit einer Aufzeichnung versehenen Teiles des Filmes reflektiert ist, und dem zweiten Lichtstrahl auftritt, der durch den mit einer Aufzeichnung versehenen Teil des Filmes hindurchgegangen und von der Unterseite der Fläche des Filmes reflektiert ist, wobei der Unterschied (ΔR) zwischen dem zweiten und dem ersten scheinbaren Reflexionswert einen ausgewählten Kontrastwert hat, in welchem Verfahren die Differenz ΔR negativ ist und die Interferenz an einem nicht mit Aufzeichnung versehenen Teil derart ist, daß keine minimale scheinbare Reflexion in Übereinstimmung mit einem versetzten Punkt erzeugt wirdm, wobei das Verfahren weiterhin die Schritte des Erzeugens eines monochromatischen Lichtstrahles, des Fokussierens des monochromatischen Lichtstrahles, um einen fokussierten Lichtpunktstrahl auf dem dünnen Aufzeichnungsfilm zu bilden, der Wärmezustands-Übergangsteile hat, wo der Lichtabsorptionskoeffizient und der Brechungsindex geändert sind, des Streichens des fokussierten Lichtpunktstrahles über den dünnen Aufzeichnungsfilm mit einer Intensität, die ausreichend niedriger als ein Intensitätsschwellwert zum Ändern optischer Charakteristiken des dünnen Aufzeichnungsfilmes ist, des Erzeugens von Inteferenzreflexionslicht zwischen Reflexionslicht von einer Lichteinfallfläche des dünnen Aufzeichnungsfilmes und einem anderen Reflexionslicht von einer Unterfläche davon, und des photoelektrischen Umwandelns des Interferenzreflexionslichtes, um dadurch ein elektrisches Signal zu erzeugen.

**Revendications**

1. Système de reproduction d'informations enregistrées sur un disque, ce disque comprenant un substrat transparent (4) revêtu d'un fine pellicule d'enregistrement (3) constituée principalement de $TeO_x$ où $0<x<2{,}00$, la pellicule ayant une épaisseur uniforme (d) et changeant d'indice de réfraction et de coefficient d'absorption aux parties irradiées si l'énergie lumineuse absorbée est supérieure à un niveau d'enregistrement, cette épaisseur uniforme (d) de la pellicule pour une longueur d'onde d'un faisceau de lumière monochromatique de reproduction, présentant une première valeur de réflexion apparente R1 lorsqu'une interférence se produit entre un premier faisceau lumineux réfléchi par la face avant d'une partie non enregistrée de la pellicule et un second faisceau lumineux que est passé par la partie non enregistrée de la pellicule et a été réfléchi par la face inférieure de la pellicule, et présentant une seconde valeur de réflexion apparente R2 lorsqu'une interférence se produit entre un premier faisceau lumineux réfléchi par la face ayant d'une partie enregistrée de la pellicule et le second faisceau lumineux qui est passé par la partie enregistrée de la pellicule et a été réfléchi par le fond de la face de la pellicule, la différence $\Delta R = R_2 - R_1$ entre la seconde et la première valeurs de réflexion apparente ayant une valeur de contraste sélectionnée, caractérisé en ce que: la différence ΔR est négative, et l'interférence d'une partie non enregistrée est telle qu'il n'y a pas production d'une réflexion apparente minimum.

2. Système selon la revendication 1, caractérisé en ce que la fine pellicule d'enregistrement (3) a un coefficient de transmission supérieure à 50%, et une couche de pellicule de réflexion est prévue sur cette surface inférieure.

3. Système d'effacement des informations enregistrées sur un disque, ce disque comprenant un substrat transparent (4) revêtu d'une fine pellicule d'enregistrement (3) constituée principalement de $TeO_x$ où $0<x<2$, la pellicule ayant une épaisseur uniforme (d) et changeant d'indice de réfraction et de coefficient d'absorption aux parties irradiées si l'énergie lumineuse absorbée est supérieure à un niveau d'enregistrement, et s'effaçant lorsque le niveau de l'énergie absorbée est supérieur au niveau de l'énergie d'enregistrement, l'épaisseur uniforme de la pellicule (d) pour une longueur d'onde d'un faisceau de lumière monochromatique de reproduction, présentant une première valeur de réflexion apparente R1 lorsqu'une interférence se produit entre un premier faisceau lumineux réfléchi par la face avant d'une partie non enregistrée de la pellicule et un second faisceau lumineux qui est passé par la partie non enregistrée de la pellicule et a été réfléchi par la face inférieure de la pellicule, et présentant une seconde valeur de réflexion apparente R2 lorsqu'une interférence se produit entre un premier faisceau lumineux réfléchi par la face avant d'une partie enregistrée de la pellicule, et le second faisceau lumineux qui est passé par la partie enregistrée de la pellicule et a été réfléchi par le fond de la face de la pellicule, la différence $\Delta R = R_2 - R_1$ entre les seconde et première valeurs de réflexion apparente ayant une valeur de contraste sélectionnée; caractérisée en ce que: la différence ΔR est négative et l'irradiation d'effacement a une intensité telle que, lorsqu'elle est absorbée à des régions enregistrées ayant une valeur de réflexion apparente réduite (R2) et un coefficient d'absorption de la lumière augmenté par rapport à des régions non-enregistrées, la valeur de l'énergie absorbée dépasse le niveau d'effacement et quand elle est absorbée à des régions non enregistrées, la valeur de l'énergie absorbée ne dépasse pas le niveau d'enregistrement.

4. Procédé de reproduction d'informations enregistrées dans un disque, le disque comprenant un substrat transparent (4) revêtu d'une fine pellicule d'enregistrement (3) constituée principalement de $TeO_x$ où $0<x<2$, la pellicule ayant un épaisseur uniform (d) et changeant d'indice de réfraction et de coefficient d'absorption à des parties irradiées si l'énergie lumineuse absorbée est supérieure à un niveau d'enregistre-

9

ment, cette épaisseur uniforme de la pellicule (d) pour une longueur d'onde d'un faisceau de lumière monochromatique de reproduction présentant une première valeur de réflexion apparente R1 lorsqu'une interférence se produit entre un premier faisceau lumineux réfléchi par la face avant d'une partie non enregistrée de la pellicule et un second faisceau lumineux qui est passé par la partie non enregistrée de la pellicule et a été réfléchi par le face inférieure de la pellicule, et présentant une seconde valeur de réflexion apparente R2 lorsqu'une interférence se produit entre un premier faisceau lumineux réfléchi par la face avant d'une partie enregistrée de la pellicule et le second faisceau lumineux qui est passé par la partie enregistrée de la pellicule et a été réfléchi par le fond de la face de la pellicule, la différence ($\Delta R$) entre les seconde et première valeurs de réflexion apparente ayant une valeur de contraste sélectionnée, où la différence $\Delta R$ est négative et l'interférence d'une partie non enregistrée est telle qu'il n'y a pas production de réflexion apparente minimum conformément à un point de décalage, le procédé comportant en outre les étapes de production d'un faisceau de lumière monochromatique; de focalisation du faisceau de lumière monochromatique de manière à former un faisceau à spot de lumière focalisée sur la fine pellicule d'enregistrement ayant des parties de transition à l'état thermique, où le coefficient d'absorption de la lumière et l'indice de réfraction sont changés; de balayage du faisceau à spot de lumière focalisée sur la fine pellicule d'enregistrement avec une intensité suffisamment inférieure à un niveau de seuil d'intensité pour changer les caractéristiques optiques de la fine pellicule d'enregistrement; de production d'une lumière de réflexion à interférence entre la lumière de réflexion provenant d'une surface d'incidence de lumière de la fine pellicule d'enregistrement et une autre lumière de réflexion provenant de sa face inférieure; et de transformation de manière photo-électrique de la lumière de réflexion à interférence, d'où la génération d'un signal électrique.

F I G . 1

F I G . 2

F I G . 3

F I G . 4

Relative Intensity
of Reflected Light

Position on track

FIG.5

FIG.6

FIG.7

Thickness    d

4

F I G . 8